# EUROPÄISCHE PATENTANMELDUNG

(11) **EP 1 862 699 A2**
(43) Veröffentlichungstag der Anmeldung: **05.12.2007**
(21) Anmeldenummer: 07109467.6
(22) Anmeldetag: 01.06.2007
(51) Int. Cl.: F16G 3/00

(54) **Teilbares Kassentransportband**

(30) Priorität: 02.06.2006 DE 202006008918 U; 16.01.2007 DE 202007000881 U
(71) Anmelder: Hahn, Annemarie, 51379 Leverkusen (DE)
(72) Erfinder: Hahn, Annemarie, 51379 Leverkusen (DE)
(74) Vertreter: Kayser, Martin

(57) **Zusammenfassung**

Die vorliegende Erfindung betrifft ein Kassentransportband (28) für die Beförderung von Waren an einer Kassiereinheit (20) mit einem Warentransporttisch (26), auf dessen Oberseite das Kassentransport Waren fördert und bereichsweise sichtbar ist. Das Kassentransportband ist über mindestens ein lösbares Verbindungsmittel (36) zu öffnen.

## Beschreibung

Die vorliegende Erfindung betrifft ein Kassentransportband für die Beförderung von Waren an einer Kassiereinheit.

Kassentransportbänder werden insbesondere in Lebensmittelgeschäften und größeren Warenhäusern an Kassiereinheiten eingesetzt, um einer Kassiererin oder einem Kassierer die Waren, die ein Käufer beispielsweise aus einem Einkaufswagen herausnimmt, zuzuführen. Der Käufer legt also die zuvor ausgewählten Waren auf dem Kassentransportband ab, die Kassiererin nimmt diese vom Band und gibt oder scannt die Preise in eine Registrierkasse ein. Anschließend werden die Waren auf dem Kassentransportband weiter in Richtung eines Beladetisches gefördert, von dem der Käufer dann die Waren herunternimmt und beispielsweise in eine Tasche verpackt.

Kassentransportbänder bestehen bisher in der Regel aus einem Kunststoffmaterial, das Stahl- oder Metallsegmente für die Aufnahme der Zugkräfte eingebracht sind. Aufgrund der Übertragung der Zugkräfte werden diese Kassentransportbänder aus Bahnen gebildet, dessen Stirnseiten zu einem Endlosband durch Verschweißen oder Verkleben zusammengefügt werden. Die somit eine vordefinierte Länge aufweisenden Kassentransportbänder werden dann in die Kassiereinheit eingesetzt und gespannt. Sind sie nach einer gewissen Zeit oder Beanspruchung beschädigt oder verschmutzt, werden die Kassentransportbänder wieder entspannt, ausgebaut und durch ein neues Kassentransportband ersetzt. Zu diesem Zweck muss die gesamte Kassiereinheit in einem relativ aufwendigen Vorgang auseinandergebaut und geöffnet werden. Dies kostet erheblich Zeit und Geld.

Die Aufgabe der vorliegenden Erfindung besteht darin, ein Kassentransportband zu schaffen, dessen Austausch schnell uns einfach erfolgen kann. Das Kassentransportband soll aber trotzdem kostengünstig herstellbar sein und den üblichen Anforderungen an Kassentransportbändern entsprechen.

Die vorliegende Aufgabe wird erfindungsgemäß dadurch gelöst, dass das Kassentransportband über mindestens ein lösbares Verbindungsmittel zu öffnen ist.

Erfindungsgemäß entfällt der aufwendige Vorgang des Öffnens der Kassiereinheit. Für einen Austausch des Kassentransportbandes wird dieses lediglich entspannt, das Verbindungsmittel geöffnet und das Kassentransportband aus der Kassiereinheit gezogen. Das neue Kassentransportband wird dann in die Kassiereinheit eingeführt, über das Verbindungsmittel geschlossen und gespannt.

Vorteilhafterweise kann das Kassentransportband auch in mindestens zwei Segmente aufteilbar sein, zu diesem Zweck sind dann mindestens zwei Verbindungsmittel vorgesehen.

Ist beispielsweise nur ein Segment des Kassentransportbandes beschädigt oder verschmutzt, wird das Kassentransportband lediglich in die Position gefahren, in der die Verbindungsmittel zugänglich sind und entspannt. Die Verbindungsmittel werden gelöst, das schadhafte Segment entnommen und ersetzt. Es ist also nicht mehr notwendig, das gesamte Kassentransportband auszutauschen.

In einer besonders vorteilhaften Ausführungsvariante ist die Länge der Segmente in Förderrichtung derart gewählt, dass deren endseitige Verbindungsmittel beide von der Oberseite des Warentransporttisches aus zugängig sind. Bei einem üblichen Warentransporttisch ist das Kassentransportband über die Länge, über die die aufgestellten Waren transportiert werden, sichtbar und zugänglich. Der Warentransporttisch weist zu diesem Zweck sozusagen eine dem Benutzer oder Kunden zugewandten Öffnung auf in der das Kassentransportband läuft. Die einzelnen Segmente des Kassentransportbandes weisen also vorteilhafterweise eine Länge auf, die in Förderrichtung geringer ist als die Länge der Öffnung des Warentransporttisches. Somit kann ein auszutauschendes Segment ohne weiteres Ziehen oder Verfahren des Kassentransportbandes dann ausgetauscht werden, wenn sich dieses innerhalb der Öffnung des Warentransporttisches, also auf der Oberseite befindet.

Die Anzahl der Segmente ist beliebig, es hat sich aber als vorteilhaft erwiesen, wenn ein Kassentransportband in drei bis fünf Segmente unterteilbar ist.

Prinzipiell eignen sich sämtliche Verbindungsmittel, die für die Übertragung von Zugkräften geeignet sind, und die Höhe oder Dicke eines Kassentransportbandes nicht wesentlich überschreiten. In einer besonders einfachen Ausführungsvariante weisen Stirnseiten des Kassentransportbandes bzw. der Segmente Vorsprünge und Ausnehmungen auf, die derart angeordnet sind, dass sie mit entsprechenden Vorsprüngen und Ausnehmungen der nächsten Stirnseite zusammen fügbar sind. In Querrichtung zur Förderrichtung weisen die Vorsprünge durchgehende Öffnungen auf, durch die ein Sicherungssteg hindurch schiebbar ist. Somit sind die Segmente über den Sicherungssteg miteinander verbunden. Wesentlich ist auch, dass die Verbindung derart beweglich ist, dass das Kassentransportband um den entsprechenden Antriebsradius geführt werden kann. Insofern muss die Verspinnung um die Querachse schwenkbar ausgeführt sein.

Eine weitere erfindungsgemäße Verbindungsmöglichkeit besteht darin, eine Vielzahl von Ösen vorgesehen ist, die an den Stirnseiten angeordnet sind und von diesen in Richtung der gegenüberliegenden Stirnseite abstehen. Die Ösen einer Stirnseite bzw. eines Segments können zwischen Ösen der gegenüberliegenden Stirnseite geschoben werden, so dass deren Öffnungen zueinander fluchten. Durch diese Öffnungen kann dann der Sicherungssteg hindurch geschoben werden, sodass eine sichere und schwenkbare Verbindung entsteht. Ein besonderer Vorteil dieser Ausführungsvariante besteht auch darin, dass die Ösen derart klein gewählt werden können, dass sie die Höhe des Kassentransportbandes nicht oder kaum überschreiten. Dies ist für einen reibungslosen Betrieb des Kassentransportbandes oder der Kassiereinheit notwendig.

In einer besonders vorteilhaften Ausführungsvariante weisen die einzelnen Ösen ein derartiges Profil auf, dass die Verbindung auch ohne den Sicherungssteg eine gewisse Zugfestigkeit aufweist. Dies wird dadurch erreicht, dass die Ösen endseitig, also im Bereich ihrer dem nächsten Segment zugewandten Köpfe, einen größeren Durchmesser aufweisen als an ihren der Stirnseite zugewandten Füßen. Derartig ausgeführte Ösen können dann nicht mehr in Längsrichtung zwischen die benachbarten Ösen geführt werden, sondern sie müssen von oben hinter die Verstärkungen der benachbarten Ösen eingebracht werden. Die Verstärkungen der Ösen liegen dann sozusagen in Längsrichtung des Kassentransportbandes hintereinander, sodass die Ösen nicht mehr auseinander gezogen werden können.

Vorteilhafterweise sind die Ösen und auch der Sicherungssteg aus einem flexiblem Material gebildet, vorzugsweise einem Kunststoff wie Polyurethan. Vorzugsweise ist dass Material des Sicherungsstift thermoplastisch, so dass der Sicherungsstift nach dem Einschieben in die Ösen endseitig erwärmt werden kann und somit eine Querschnittsvergrößerung erfährt, die ein Herausziehen des Sicherungsteges durch die Ösen hindurch verhindert.

Die Erfindung eignet sich insbesondere auch für einen Austausch von Segmenten eines Kassentransportbandes, das mit Werbung versehen ist.

Warenhäuser und Supermärkte sind in der Regel mit sehr viel Werbung und Informationsmitteln ausgestattet. Die zu kaufenden Produkte werden entweder direkt an den Regalen beworben oder es finden sich weitere Werbemittel in den Verkaufsräumen, die den Käufer dazu bewegen sollen, die entsprechenden Produkte zu kaufen. Im Bereich der Kassen sind üblicherweise Produkte angeordnet, die einem Spontankauf besonders zugänglich sind. Dies können Zigaretten oder Süßigkeiten sein, auch sind oftmals Batterien oder ähnliche Kleinprodukte im Bereich der Kassen angeordnet.

Auch ist Werbung unmittelbar auf den Kassentransportbändern bekannt. Dabei besteht aber das Problem, dass die Werbeaufdrucke oder Werbeaufkleber mit der Zeit abnutzen und/oder verschmutzen. In einem solchen Fall müssen die als Endlosbänder ausgeführten Kassentransportbänder vollständig ausgetauscht werden, was mit einem Öffnen der Kassiereinheit verbunden ist. Dies ist teuer uns zeitaufwendig. Das gleiche Problem ergibt sich, wenn die Kassentransportbänder unabhängig von Werbebereichen beschädigt sind.

Kassentransportbänder sind in der Regel dunkelgrau oder schwarz und bieten keinen besonders ansehnlichen Anblick. Trotzdem sind Kassentransportbänder ein Blickfang für den Käufer, da er gezwungen ist, beim Auflegen seiner Waren das Kassentransportband im Blick zu behalten. Auch muss er dann, wenn sich eine Person vor ihm befindet, das Kassentransportband, um feststellen zu können, wann ausreichend Platz für seine Waren gegeben ist.

Werbung auf Kassentransportbändern macht sich genau diese Schwachstellen, nämlich das unschöne Aussehen der Kassentransportbänder und die Blickfangfunktion zunutze, indem sie die sonst ungenutzte Fläche der Kassentransportbänder für die Vermittlung von Informationen, insbesondere von Werbung nutzt.

Erfindungsgemäß werden die Kassentransportbänder unmittelbar mit der entsprechenden Information oder dem entsprechenden Werbeslogan oder einer grafischen Darstellung bedruckt. Alternativ besteht die Möglichkeit, die Kassentransportbänder mit entsprechend gut haftenden Aufklebern zu versehen, die ihrerseits wiederum die entsprechenden Informationen und Werbeaussagen aufweisen. In beiden Fällen kann es vorteilhaft sein, wenn die mit Informationen versehenen Bereiche durch eine transparente Schutzbeschichtung beispielsweise aus Makrolon geschützt sind. Diese kann aus einer strapazierfähigen Folie bestehen, es bieten sich aber auch andere geeignete Lackierungen oder Laminierungen an.

Der besondere Vorteil des Bedruckens und des Beklebens besteht u.a. darin, dass Kassentransportbänder üblicherweise als Endlosbänder ausgeführt sind und dementsprechend an ihren beiden Enden um Rollen geführt sind. Die mit Informationen versehenen Bereiche sind also entsprechend flexibel auszuführen, was durch eine direkte Bedruckung oder Beklebung erreicht wird.

Ein weiterer Vorteil der Erfindung besteht darin, dass das Bedrucken und Bekleben von Transportbändern schnell und einfach durchzuführen ist.

In einer besonders vorteilhaften Ausführungsvariante weist die Kassiereinheit eine Reinigungsvorrichtung für das umlaufende Kassentransportband auf. Diese kann aus einer Bürste bestehen, die mit dem Kassentransportband über die gesamte Breite in Kontakt steht, es ist aber auch möglich, ein Reinigungsmittel vor oder im Bereich der Bürste zuzuführen.

Die Information oder Werbung kann vorteilhafterweise auch derart ausgeführt sein, dass beim Betrachten ein dreidimensionaler Effekt entsteht. Die Information oder Werbung wirkt optisch sozusagen als Körper.

Auch kann es sinnvoll sein, wenn die Kassiereinheit ein stromsparendes Aggregat aufweist, um die Energiekosten der Kassiereinheit möglichst gering zu halten. Auch ist der Einsatz von Batterien denkbar.

Ein wesentlicher Vorteil der Nutzung von Kassentransportbändern für Information und Werbung wird insbesondere dann erreicht, wenn die auf dem Kassentransportband beworbenen Artikel in unmittelbarer Nähe der Kasse angeordnet sind. Dies hat den Vorteil, dass ein Käufer, der auf ein bestimmtes Produkt aufmerksam gemacht wird, dieses noch schnell aus dem Regal nehmen kann, bevor er die Waren zahlen muss. Besonders geeignet sind deshalb beispielsweise Zigaretten oder Süßwaren. Möglich ist auch die Verwendung von bedruckten Kassentransportbändern beispielsweise in einem Kaufhaus, das neben Lebensmitteln auch andere Artikel, beispielsweise Bekleidung oder Elektroartikel anbietet. Der Käufer kann über das Kassentransportband auf diese Produkte aufmerksam gemacht werden, er wird so angeregt, auch andere Abteilungen des Kaufhauses zu besuchen.

Anhand der nachfolgenden Figuren wird die Erfindung näher erläutert. Dabei sollen die gezeigten Details die Erfindung nicht beschränken, sie dienen lediglich der Illustration. Es zeigen:

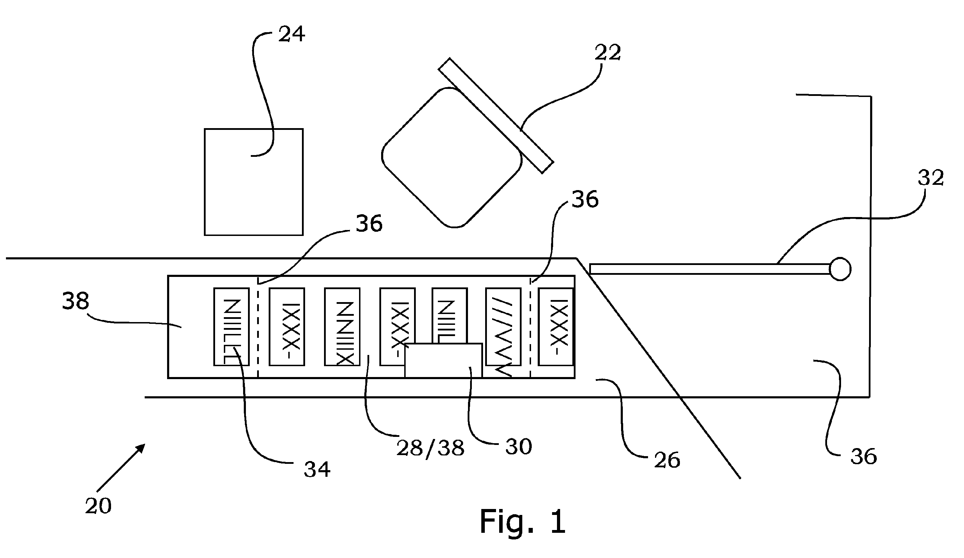

Fig. 1: eine Kassiereinheit mit einem erfindungsgemäßen Kassentransportband,
Fig. 2: eine erfindungsgemäße Ausführung eines Verbindungsmittels,
Fig. 3: eine weitere eine erfindungsgemäße Ausführung eines Verbindungsmittels
Fig. 4: eine Prinzipdarstellung dreier Ösen in Draufsicht.

Gezeigt ist eine Kassiereinheit 20 in prinzipieller Darstellung von oben. Diese weist üblicherweise einen Stuhl 22 für eine Kassiererin oder einen Kassierer auf, der vor einer Registrierkasse 24 und einem Warentransporttisch 26 angeordnet ist. Der Warentransporttisch 26 weist wiederum ein Kassentransportband 28 auf, das entlang der Registrierkasse 24 und der Kassiererin verläuft und an einem Entnahmetisch 36 endet. Oftmals ist gegenüber dem Stuhl 22 bzw. gegenüber der Kassiererin ein Display 30 angeordnet, über das der Kunde bzw. Käufer über die eingegebenen Preise und schließlich den zu zahlenden Endbetrag informiert wird.

Auf dem Entnahmetisch 36 ist ein schwenkbares Teilungselement 32 vorgesehen, mit dem die Waren auf dem Entnahmetisch 36 in zwei Sektionen geleitet werden können. Dies ist dann notwendig, wenn ein erster Käufer seine Waren noch nicht vollständig vom Entnahmetisch 36 genommen hat, aber bereits weitere Waren eines anderen Käufers über das Kassentransportband 28 gefördert werden.

Die Eingabe der relevanten Daten in die Registrierkasse 24 kann manuell, also über eine Tastatur, einen Scanner oder jede andere geeignete Methode erfolgen.

Erfindungsgemäß ist das Kassentransportband 28 über ein lösbares Verbindungsmittel 36 zu öffnen. Weiterhin weist das Kassentransportband 28 Bereiche 34 auf, die mit Informationen versehen sind. Bei den Informationen kann es sich um interne Mitteilungen des Warenhauses an den Kunden handeln, die Informationen können aber auch insbesondere Werbung für Produkte beinhalten. Auch ist es möglich, dass beispielsweise weitere Geschäfte, die nicht in Konkurrenz mit dem Geschäft stehen, das mit dem Kassentransportband 28 wirbt, auf dem Kassentransportband 28 werben.

Das Kassentransportband 28 kann aus jedem geeigneten Material hergestellt sein, es eignen sich insbesondere thermoplastische Gummimaterialien. Vorzugsweise ist das Kassentransportband 28 als Endlosband ausgeführt.

Die Bereiche 34, die mit Informationen versehen sind, können beliebig angeordnet und ausgeführt sein. Beispielsweise kann nur ein einziger Bereich 34 vorhanden sein, der das gesamte Kassentransportband 28 bedeckt. Alternativ ist auch eine Vielzahl von Bereichen 34 denkbar, die entweder alle die gleiche Information oder unterschiedliche Information beinhalten. Auch ist die Ausrichtung der Information bzw. der Werbung auf dem Kassentransportband 28 frei wählbar.

Die Bereiche 34 können vorzugsweise unmittelbar auf das Kassentransportband 28 gedruckt sein, sie können aber auch durch geeignete Aufkleber, die auf das Kassentransportband 28 geklebt sind, gebildet sein. In beiden Fällen kann es sinnvoll sein, eine abriebfeste transparente und lichtdurchlässige Beschichtung vorzusehen, die die Bereiche 34 vor zu starker Beanspruchung durch die Waren schützt. Es bietet sich eine Beschichtung mit Makrolon an, die Bereiche 34 können aber auch eingeschweißt sein.

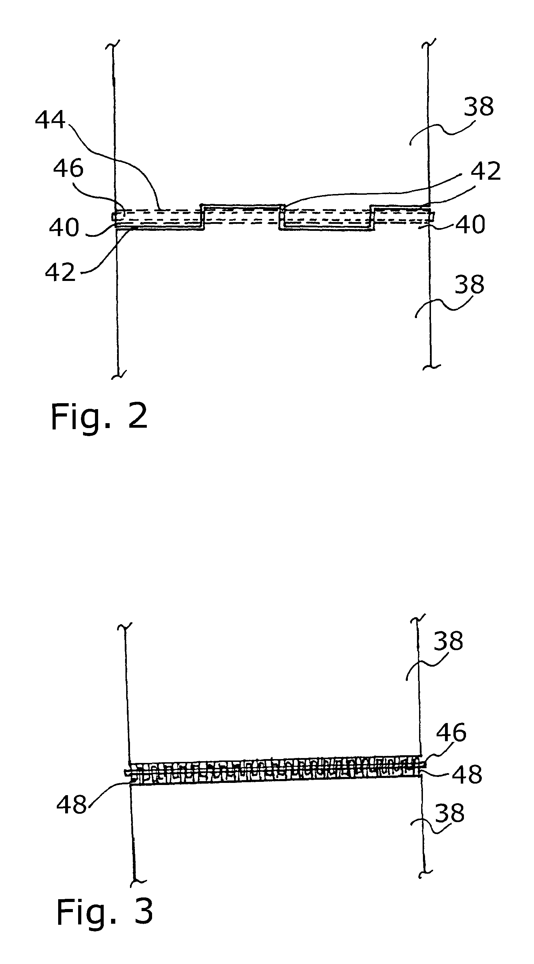

Figur 2 zeigt eine erste erfindungsgemäße Ausführung des Verbindungsmittels 36 in Draufsicht. Das Kassentransportband 28 besteht aus Segmenten 38, diese weisen Vorsprünge 40 und Ausnehmungen 42 auf. Die Vorsprünge 40 weisen quer zur Längsrichtung des Kassentransportbandes 28 verlaufende durchgängige Öffnungen 44 auf, durch die ein Sicherungssteg 46 einschiebbar ist. Somit ergibt sich eine schwenkbare und zugfeste Verbindung.

Figur 3 zeigt eine weitere erfindungsgemäße Ausführung eines Verbindungsmittels 36. An Stirnseiten der Segmente 38 sind Haken 54 vorgesehen, die einen der-artigen Abstand zueinander aufweisen, dass die Haken 54 einander zugewandter Segmente 38 ineinander geschoben werden können. Durch die Öffnungen 44 der Haken 54 wird ebenfalls ein Sicherungssteg 46 hindurchgeführt.

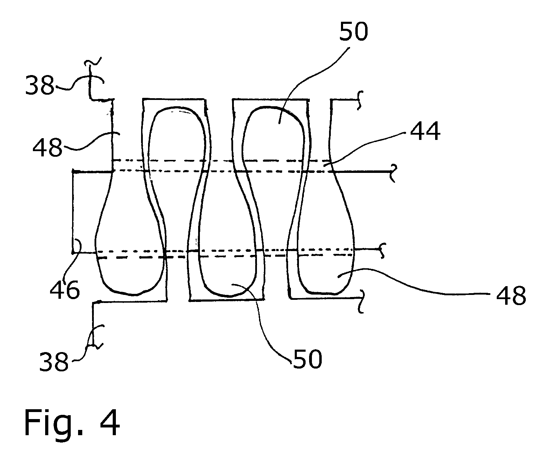

Figur 4 verdeutlicht eine sehr vorteilhafte Ausführungsvariante der Haken 54.
Die-se weisen in ihren Kopfbereichen, also im Bereich ihrer freien Enden Verstärkun-gen 50 auf. Im Fußbereich der Haken 54 ist der Abstand derart groß, dass die Verstärkungen 50 zwischen zwei nebeneinander angeordneten Haken 54 gebracht werden können. Hiermit wird erreicht, dass die Haken 54 in Längsrichtung der Förderbänder eine Zugfestigkeit aufweisen, die auch ohne eingesetzten Siche-rungssteg 46 gegeben ist.

Die Erfindung ist nicht auf die beschriebenen Ausführungsbeispiele beschränkt, sondern umfasst auch alle weiteren Ausführungen, die auf der Erfindung basieren.

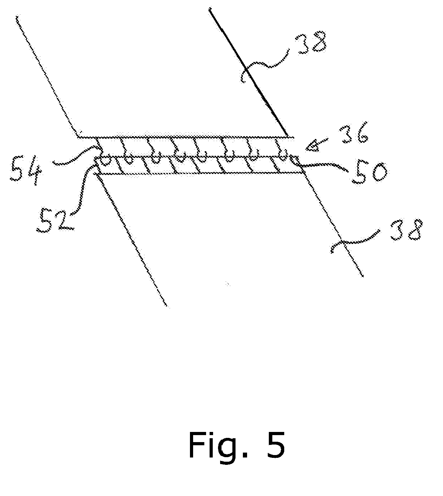

Figur 5 zeigt eine weitere Möglichkeit von Verbindungsmitteln 36. Eine Stirnseite weißt Haken 54 auf, die in einen parallel zur Stirnseite des gegenüberliegenden Elements 38 verlaufenden Haltesteg 50 eingreifen. Dieser Haltesteg 50 ist mit dem entsprechenden Segment 38 beispielsweise über Verbindungsstege 52 verbunden. Die Ausführungsvariante ist sehr einfach und schnell zu Öffnen und zu Schließen und bietet ebenfalls eine hohe Haltbarkeit.

Es wird explizit darauf hingewiesen, dass Figur 5 lediglich beispielhaft zu verstehen ist und die Verbindungsmittel 36 nur sehr stark vereinfacht zeigt. Insbesondere kann es erfindungsgemäß vorgesehen sein, möglichst viele Haken 54 vorzusehen, die entsprechend nahe beieinander liegen. Weiterhin können die Verbindungsmittel 36 derart ausgeführt sein, dass die Segmente 38 möglichst dicht aneinander kommen können. Das heißt, die Haken 54 und auch der Haltesteg 50 bzw. die Verbindungsstege 52 sollten entsprechend geringe Längen aufweisen.

## Patentansprüche

1. Kassentransportband (28) für die Beförderung von Waren an einer Kassiereinheit (20) mit einem Warentransporttisch (26), auf dessen Oberseite das Kassentransport (28) Waren fördert und bereichsweise sichtbar ist, **dadurch gekennzeichnet, dass** das Kassentransportband über mindestens ein lösbares Verbindungsmittel (36) zu öffnen ist.

2. Kassentransportband (28) nach Anspruch 1, **dadurch gekennzeichnet, dass** das Verbindungsmittel (36) durch an Stirnseiten des geöffneten Kassentransportband (28) befindliche Ösen (48) gebildet ist, die derart ausgeführt und angeordnet sind, dass die Ösen (48) der gegenüber angeordneten Stirnseiten Seite an Seite ineinander schiebbar sind, so dass ihre Öffnungen fluchten und ein Sicherungssteg (46) in die Öffnungen einschiebbar ist.

3. Kassentransportband (28) nach Anspruch 2, **dadurch gekennzeichnet, dass** die Ösen (48) ein derartiges Profil aufweisen, dass sie dann, wenn sie mit Ösen (48) der gegenüberliegenden Stirnseite im Eingriff stehen, auch ohne Sicherungssteg (46) Zugkräften standhalten, ohne dass sich die Segmente (38) voneinander lösen.

4. Kassentransportband (28) nach Anspruch 3, **dadurch gekennzeichnet, dass** die Ösen (48) in ihren Kopfbereichen, also im Bereich ihrer freien Enden, Verstärkungen (50) aufweisen und im Fußbereich der Ösen (48) der Abstand derart groß ist, dass die Verstärkungen (50) zwischen zwei nebeneinander angeordneten Ösen (48) gebracht werden können.

5. Kassentransportband (28) nach einem der Ansprüche 2 bis 4, **dadurch gekennzeichnet, dass** die Ösen (48) und der Sicherungssteg (46) aus einem flexiblen Material gebildet sind.

6. Kassentransportband (28) nach einem der Ansprüche 1 bis 5, **dadurch gekennzeichnet, dass** das Kassentransportband (28) durch mindestens zwei lösbares Verbindungsmittel (36) in mindestens zwei Segmente (38) aufteilbar ist.

7. Kassentransportband (28) nach Anspruch 6, **dadurch gekennzeichnet, dass** die einzelnen Segmente (38) derartige Abmessungen aufweisen, dass sie dann, wenn sie sich auf der Oberseite des Warentransporttisches (26) befinden, vollständig sichtbar sind.

8. Kassentransportband (28) nach Anspruch 6 oder Anspruch 7, **dadurch gekennzeichnet, dass** drei Segmente (38) vorgesehen sind.

9. Kassentransportband (28) nach einem der Ansprüche 1 bis 8, **gekennzeichnet durch** mindestens einen Bereich (34), der sichtbare Informationen aufweist.

10. Kassentransportband (28) nach Anspruch 9, **dadurch gekennzeichnet, dass** der mindestens eine Bereich (34) vollständig auf einem der Segmente (38) angeordnet ist.

11. Kassentransportband (28) nach Anspruch 9 oder 10, **dadurch gekennzeichnet, dass** der Bereich (34) durch einen Aufdruck gebildet ist.

12. Kassentransportband (28) nach einem der Ansprüche 9 bis 11, **dadurch gekennzeichnet, dass** es sich bei den Informationen um Werbeaussagen handelt.
